**Europäisches Patentamt**

**European Patent Office**

**Office européen des brevets**

(11) Numéro de publication : **0 027 639**
**B1**

(12) **FASCICULE DE BREVET EUROPÉEN**

(45) Date de publication du fascicule du brevet :
16.02.83

(51) Int. Cl.³ : **C 04 B 35/58**

(21) Numéro de dépôt : 80106295.1

(22) Date de dépôt : 16.10.80

(54) **Procédé de fabrication de pièces en silicium nitruré.**

(30) Priorité : 23.10.79 FR 7926222

(43) Date de publication de la demande :
29.04.81 Bulletin 81/17

(45) Mention de la délivrance du brevet :
16.02.83 Bulletin 83/07

(84) Etats contractants désignés :
DE FR GB IT

(56) Documents cités :
EP A 0 013 433
FR A 2 046 973
FR A 2 339 584
JOURNAL OF MATERIALS SCIENCE, Vol. 11,
1976, Chapman & Hall Ltd. LONDRES (GB) J.P.
TORRE et al. : « Some effects of A1 and O2 on the
nitridation of silicon compacts » pages 1725-1733

(73) Titulaire : **ASSOCIATION POUR LA RECHERCHE ET
LE DEVELOPPEMENT DES METHODES ET PROCES-
SUS INDUSTRIELS (ARMINES)**
**60, Boulevard Saint-Michel**
**F-75272 Paris Cedex 06 (FR)**

**CERAVER Société anonyme dite:**
**12, rue de la Baume**
**F-75008 Paris (FR)**

(72) Inventeur : **Torre, Jean-Paul**
**1, Allée des Chardonnerets**
**Ormoy F-91540 Mennecy (FR)**
Inventeur : **Demit, Joel**
**21, rue Alsace-Lorraine**
**F-65000 Tarbes (FR)**

(74) Mandataire : **Weinmiller, Jürgen et al.**
**Zeppelinstrasse 63**
**D-8000 München 80 (DE)**

## Procédé de fabrication de pièces en silicium nitruré

La présente invention concerne un procédé de fabrication de pièces en silicium nitruré par frittage de poudre de silicium additionné d'aluminium sous atmosphère riche en azote.

On sait que le nitrure de silicium obtenu par frittage nitrurant de poudre de silicium est un matériau très intéressant par ses propriétés de résistance à des températures élevées. Il a en outre été montré que la nitruration du silicium exigeait des pressions partielles d'oxygène extrêmement faibles pour éviter la stabilisation d'une couche de silice superficielle sur les particules de la poudre de départ. On a satisfait à cette condition par l'addition d'hydrogène au gaz nitrurant ou par l'incorporation à la poudre de départ de substances jouant le rôle de piège à oxygène, en particulier l'aluminium. Par ailleurs, la présence d'aluminium permet, après une oxydation à chaud préliminaire, d'obtenir une bonne résistance à l'oxydation des pièces fabriquées, selon le procédé défini dans la demande de brevet français n° 79 00268 du 4 janvier 1979.

Le dosage de la teneur en oxygène du gaz de nitruration en fonction de la quantité d'aluminium ajoutée à la poudre de silicium de départ permet en outre de contrôler le développement de la microstructure des pièces en cours de frittage, et d'obtenir des pièces ne comportant qu'une seule phase solide (Journal of Materials Science, 11, 1976, p. 1725-1733). Il est cependant très difficile de contrôler la teneur en oxygène du gaz de nitruration aux faibles niveaux nécessaires (de l'ordre du dizième de millibar) dans des installations industrielles. En effet, parmi les fours industriels, les fours à éléments chauffants métalliques ne conviennent pas, car ces derniers ne supporteraient pas l'action de l'oxygène transporté par le gaz nitrurant. Quant aux fours à éléments de graphite, les équilibres chimiques du carbone, de l'oxygène et des oxydes de carbone y limitent la pression partielle d'oxygène à des valeurs extrêmement faibles (de l'ordre de $10^{-17}$ millibar). On ne peut dans ces conditions contrôler le développement de la microstructure des pièces en cours de frittage à l'aide de la teneur en oxygène du gaz de nitruration.

La présente invention a pour but de procurer un procédé permettant de contrôler le développement de la microstructure de pièces en silicium additionné d'aluminium dans des fours industriels, et par suite d'obtenir des pièces en silicium nitruré homogènes et de faible porosité, tout en conservant les avantages qu'apporte l'addition d'aluminium au silicium de départ, notamment en ce qui concerne la résistance à l'oxydation des pièces.

Le procédé selon l'invention est caractérisé en ce que l'atmosphère riche en azote est additionnée d'une petite quantité de monoxyde de carbone, et en ce que les pressions partielles d'azote et de monoxyde de carbone, ainsi que la teneur en aluminium de la poudre de silicium, sont choisies de façon que la réaction d'oxydation par le monoxyde de carbone du silicium nitruré formé dans les couches superficielles des pièces y maintienne une porosité ouverte suffisante pour permettre la pénétration de l'azote au cœur des pièces jusqu'à leur nitruration homogène.

Il répond en outre de préférence à au moins l'une des caractéristiques suivantes :
— La teneur en aluminium de la poudre de silicium est comprise entre 5 % et 15 % en poids, et la teneur en monoxyde de carbone de l'atmosphère riche en azote est inférieure à 1 % en volume.
— Le frittage est effectué dans un four à élément chauffant en graphite.
— La poudre de silicium additionnée d'aluminium est soumise, préalablement à la réaction de nitruration, à une désaération sous vide à chaud.

Bien que le mécanisme de l'action du monoxyde de carbone au cours de la nitruration soit complexe et fasse intervenir de nombreux équilibres chimiques, et qu'en outre il faille certainement faire intervenir des considérations cinétiques, il semble que le développement de la microstructure au cours de la nitruration résulte de la compétition entre deux mécanismes principaux :
— d'une part, l'ensemble des réactions chimiques concourant directement à la formation du nitrure de silicium avec formation d'une structure non poreuse,
— d'autre part, la réaction du monoxyde de carbone sur le nitrure de silicium déjà formé

$$3\,CO + Si_3N_4 \rightarrow 3\,SiO + 2N_2 + 3\,C \qquad (1)$$

qui se traduit par la volatilisation de matière condensée et contribue donc à créer ou agrandir des pores.

L'un ou l'autre mécanisme peut être prédominant suivant les valeurs relatives des pressions partielles de monoxyde de carbone et d'azote sur le front de réaction. Ces pressions partielles sont déterminées, pour une teneur en monoxyde de carbone donnée de l'atmosphère du four, d'une part par la pression et/ou le débit d'azote dans le four, d'autre part par la proportion d'aluminium ajoutée au silicium de départ, l'aluminium faisant disparaître le monoxyde de carbone suivant la réaction

$$2\,Al + CO \rightarrow Al_2O + C \qquad (2)$$

à laquelle vient éventuellement s'ajouter

$$Al_2O + 2\,CO \rightarrow Al_2O_3 + 2\,C. \qquad (3)$$

Ainsi, avec une quantité donnée d'aluminium, lorsque l'on a une pression et/ou un débit d'azote trop faibles, autrement dit lorsque l'atmosphère du four n'est pas en mesure de fournir suffisamment de molécules nouvelles d'azote au front de réaction pour compenser la consommation d'azote par les réactions de nitruration, la phase gazeuse peut s'appauvrir localement en azote au point de provoquer la formation de très gros pores par la réaction (1) ; à l'inverse, si l'apport d'azote par l'atmosphère du four est suffisamment abondant, la réaction (1) peut n'avoir aucune chance de se produire mais alors le nitrure de silicium qui se forme dans les couches superficielles paraît y provoquer une réduction prématurée de la porosité ouverte et faire obstacle à la pénétration de l'azote dans les couches profondes des objets. Il existe en fait, pour une teneur donnée de monoxyde de carbone, une valeur optimale de la pression ou du débit d'azote dans le four permettant une nitruration homogène. Cette valeur optimale est d'autant plus grande que la quantité d'aluminium, qui maintient localement la pression partielle de monoxyde de carbone à un niveau bas, est faible.

Bien que l'explication qui vient d'être donnée des mécanismes d'action du monoxyde de carbone et de l'aluminium paraisse la plus vraisemblable, on comprendra que l'invention ne lui est nullement limitée.

Il est décrit ci-après, à titre d'exemple, des essais de nitruration de poudre de silicium additionnée d'aluminium dans un four industriel à élément chauffant en graphite dans lequel la teneur de l'atmosphère en monoxyde de carbone correspondait à 0,9 % en volume.

Les masses comprimées de départ (de dimensions $30 \times 30 \times 10$ mm) ont été obtenues par pressage à froid de poudre de silicium de surface spécifique Blaine 12 000 $cm^2/g$, additionnée de 6 ou 10 % en poids d'aluminium.

Elles étaient disposées à l'intérieur d'un récipient de mullite, coiffé d'un couvercle lui-même en mullite et placé au centre de l'élément chauffant en graphite. Les nitrurations ont été effectuées sans renouvellement de l'atmosphère d'azote du four, en faisant simplement en sorte que la pression totale P se maintienne à une valeur constante au cours du traitement thermique. Celui-ci consistait en une étape de désaération sous vide jusqu'à une température de l'ordre de 1 000 °C, suivie de l'introduction d'azote très pur sous la pression P. La température était alors élevée jusqu'à 1 350 °C et maintenue à cette valeur pendant 3 jours. Le traitement était enfin complété par un maintien pendant 24 heures à 1 450 °C, à l'issue duquel on laissait le four se refroidir naturellement. La pression P a été fixée à 400, 670 ou 800 millibars, et la pression partielle de monoxyde de carbone était celle indiquée ci-dessus.

Après tronçonnage et polissage des échantillons, on a pu faire les observations micrographiques suivantes :

— avec la plus faible quantité d'aluminium (6 % en poids), il se forme sous la pression la plus basse (400 millibars) une zone poreuse externe révélatrice de l'intervention de la réaction (1). Sous la pression la plus élevée (800 millibars), on observe au contraire la formation d'une zone externe dense entourant une zone plus poreuse dont la présence témoigne de la réduction hâtive de la porosité dans la zone externe, empêchant l'azote d'accéder à la zone suivante. Entre ces deux cas extrêmes, une pression de 670 millibars conduit à des échantillons homogènes ;

— avec 10 % en poids d'aluminium, le défaut apparu précédemment sous la pression la plus forte est plus marqué et est encore visible après qu'on ait abaissé la pression à 670 millibars. Ce n'est que sous 400 millibars que l'on obtient des échantillons homogènes.

Bien que les conditions opératoires qui viennent d'être décrites ci-dessus paraissent les plus favorables pour la mise en œuvre de l'invention, on comprendra que diverses modifications peuvent leur être apportées sans sortir du cadre de celle-ci. En particulier, les pressions optimales indiquées pourraient être modifiées si l'on utilisait un four différent, si l'on partait de poudre de silicium de pureté ou de granulométrie différentes, ou si l'on utilisait une teneur en aluminium différente de la poudre ou une pression partielle de monoxyde de carbone différente.

De même, dans les exemples cités précédemment, les atmosphères gazeuses sont constituées d'azote et de monoxyde de carbone. On comprendra qu'il est possible de diluer ces atmosphères dans d'autres gaz, en particulier des gaz neutres tels qu'hélium, argon, etc... sans sortir du cadre de l'invention.

L'invention s'applique en particulier à la fabrication de pièces conservant une bonne résistance mécanique à haute température notamment pour turbines à gaz à haut rendement et moteurs Diesel dits adiabatiques.

## Revendications

1. Procédé de fabrication de pièces en silicium nitruré par frittage de poudre de silicium additionnée d'aluminium sous atmosphère riche en azote, caractérisé en ce que l'atmosphère riche en azote est additionnée d'une petite quantité de monoxyde de carbone, et en ce que les pressions partielles d'azote et de monoxyde de carbone, ainsi que la teneur en aluminium de la poudre de silicium, sont choisies de façon que la réaction d'oxydation par le monoxyde de carbone du silicium nitruré formé dans les couches superficielles des pièces y maintienne une porosité ouverte suffisante pour permettre la pénétration de l'azote au cœur des pièces jusqu'à leur nitruration homogène.

2. Procédé selon la revendication 1, caractérisé en ce que la teneur en aluminium de la poudre de silicium est comprise entre 5 % et 15 % en poids, et la teneur en monoxyde de carbone de l'atmosphère riche en azote inférieure à 1 % en volume.

3. Procédé selon les revendications 1 ou 2, caractérisé en ce que le frittage est effectué dans un four à élément chauffant en graphite.

4. Procédé selon l'une des revendications 1 à 3, caractérisé en ce que la poudre de silicium additionnée d'aluminium est soumise, préalablement à la réaction de nitruration, à une désaération sous vide à chaud.

**Claims**

1. A method of manufacturing nitrided silicium articles by sintering silicium powder with an admixture of aluminium under an atmosphere that is rich in nitrogen, characterized in that a small quantity of carbon monoxide is added to the atmosphere rich in nitrogen, and in that the nitrogen and carbon monoxide partial pressures as well as the aluminium content of the silicium powder are chosen so that the oxidation reaction by the carbon monoxide of the nitrided silicium formed in the surface layers of the articles maintains therein an open porosity which is sufficient to allow the nitrogen to penetrate to the cores of the articles until they are homogeneously nitrided.

2. A method according to claim 1, characterized in that the aluminium content of the silicium powder is between 5 and 15 % by weight and that the carbon monoxide content of the atmosphere rich in nitrogen is less than 1 % by volume.

3. A method according to the claims 1 or 2, characterized in that the sintering is carried out in a furnace with a graphite heating element.

4. A method according to one of the claims 1 to 3, characterized in that the silicium powder with an admixture of aluminium undergoes deaeration in a vacuum and under heat influence, prior to the nitriding reaction.

**Ansprüche**

1. Verfahren zur Herstellung von Körpern aus nitridiertem Silizium durch Sinterung von mit Aluminium angereichertem Siliziumpulver unter stickstoffreicher Atmosphäre, dadurch gekennzeichnet, daß die stickstoffreiche Atmosphäre mit einer kleinen Menge Kohlenmonoxyd angereichert wird und daß die Teildrücke von Stickstoff und Kohlenmonoxyd wie auch der Aluminiumgehalt des Siliziumpulvers so gewählt sind, daß die Oxydationsreaktion des Kohlenmonoxyds des nitridierten Siliziums, das sich in den oberen Schichten der Körper bildet, dort eine offene Porosität aufrechterhält, die ausreicht, um das Eindringen des Stickstoffs in den Kern der Körper bis zu deren homogener Nitridierung zu ermöglichen.

2. Verfahren nach Anspruch 1, dadurch gekennzeichnet, daß der Aluminiumgehalt des Siliziumpulvers zwischen 5 und 15 Gewichtsprozent und der Kohlenmonoxydgehalt der stickstoffreichen Atmosphäre unter einem Volumenprozent liegt.

3. Verfahren nach den Ansprüchen 1 oder 2, dadurch gekennzeichnet, daß die Sinterung in einem Ofen mit Graphitheizelement durchgeführt wird.

4. Verfahren nach einem der Ansprüche 1 bis 3, dadurch gekennzeichnet, daß das mit Aluminium angereicherte Siliziumpulver vor der Nitridierreaktion einer Entgasung unter Vakuum und unter Hitze unterzogen wird.